(19) Europäisches Patentamt European Patent Office Office européen des brevets

(11) **EP 3 666 482 B1**

(12) **EUROPEAN PATENT SPECIFICATION**

(45) Date of publication and mention
of the grant of the patent:
**31.08.2022 Bulletin 2022/35**

(21) Application number: **18845591.9**

(22) Date of filing: **06.07.2018**

(51) International Patent Classification (IPC):
**B23D 47/12** *(2006.01)* **B25F 5/02** *(2006.01)*

(52) Cooperative Patent Classification (CPC):
**B23D 45/16; B23D 47/12; B25F 5/00; B27B 9/00**

(86) International application number:
**PCT/CN2018/094907**

(87) International publication number:
**WO 2019/033875 (21.02.2019 Gazette 2019/08)**

(54) **CIRCULAR SAW**

**KREISSÄGE**

**SCIE CIRCULAIRE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2017 CN 201710709777**
**28.03.2018 CN 201810265661**

(43) Date of publication of application:
**17.06.2020 Bulletin 2020/25**

(73) Proprietor: **Nanjing Chervon Industry Co., Ltd.**
**Nanjing, Jiangsu 211106 (CN)**

(72) Inventors:
• **DING, Xiaogang**
**Nanjing**
**Jiangsu 211106 (CN)**
• **DUAN, Junya**
**Nanjing**
**Jiangsu 211106 (CN)**
• **YIN, Tiantian**
**Nanjing**
**Jiangsu 211106 (CN)**
• **ZHOU, Huilong**
**Nanjing**
**Jiangsu 211106 (CN)**

(74) Representative: **Sun, Yiming**
**HUASUN Patent- und Rechtsanwälte**
**Friedrichstraße 33**
**80801 München (DE)**

(56) References cited:
EP-A1- 2 693 019    EP-A1- 3 142 219
WO-A1-2017/063852    CN-A- 1 769 012
CN-A- 105 246 661    CN-A- 105 246 661
CN-A- 107 294 438    CN-Y- 201 371 283
JP-A- 2000 326 265    JP-A- 2013 173 228
US-A1- 2006 266 184

## Description

## TECHNICAL FIELD

The present disclosure relates to the technical field of power tools, and in particular, a circular saw.

Specifically, the present invention relates to a circular saw according to the generic part of independent claim 1 as attached.

## BACKGROUND

Document US 2006/0266184 A1 discloses a circular saw of the generic type as specified above. JP2013173228 discloses a circular saw with a brushless motor according to the preamble of claim 1.

For an existing circular saw, a drive circuit is powered by a power supply, and a motor is driven by the drive circuit. However, at present, power is unidirectionally supplied to the drive circuit from the power supply, and power utilization efficiency is not high. Power utilization efficiency refers to an efficiency with which the power output by the power supply is converted into mechanical energy. Corresponding to the circular saw, the power utilization efficiency refers to a number of cuttings of the circular saw, which may be evaluated by a number of cuttings per watt-hour. At present, a power reserve per watt-hour of the power supply may only afford the circular saw for a number of 0.8 cuttings, and the power utilization efficiency is not high.

## SUMMARY

In order to solve the shortcomings of the related art, an object of the present disclosure is to provide a circular saw. By controlling a motor, in particular, by precise and independent control of current in the motor, the optimization of the performance of the circular saw and the improvement of power utilization efficiency are achieved.

To achieve the above-mentioned object, the present disclosure adopts the technical solution according to independent claim 1 as attached.

Preferred embodiments of the invention are specified in dependent claims as attached and in the subsequent description.

## THE BENEFICIAL EFFECTS

According to the disclosure, a signal processing unit processes a phase current and/or a bus current of the motor obtained by sampling to generate a drive signal, and drives the motor according to the drive signal, so that the motor outputs a sinusoidal current. Through the processing of the signal processing unit, the drive signal generated by the present disclosure may control a direction and an amplitude of the sinusoidal current of the motor to feed back a current component generated by the motor to the power supply to charge the power supply, which realizes energy recovery, and controlling the charging current to the power supply during the energy recovery process to be not greater than 50A to avoid excessive impact on the power supply, so that the power supply is protected, and at least 0.01wh of energy in each shutdown process is recovered. Through the energy recovery, for the circular saw described in the present disclosure, the power reserve per watt-hour of the power supply may afford the circular saw to complete a number of at least 0.9 cuttings. That is, the power utilization efficiency of the present disclosure is improved by at least 1/5 compared with the existing circular saw. That is to say, under a condition of an identical amount of power reserve of a power supply, effective working time of the circular saw described in the present disclosure may be extended to 1.2 times or more the length of the existing circular saw.

## BRIEF DESCRIPTION OF DRAWINGS

FIG. 1 is a schematic view illustrating an external structure of a circular saw in a first embodiment provided by the present disclosure;

FIG. 2 is a schematic view illustrating a connection relationship of a circular saw in a second embodiment provided by the present disclosure;

FIG. 3 is a structural schematic view illustrating a circular saw in a third embodiment provided by the present disclosure;

FIG. 4 is an architectural block diagram illustrating a circuit system in the first embodiment provided by the present disclosure;

FIG. 5 is an architectural block diagram illustrating a circuit system in the second embodiment provided by the present disclosure;

FIG. 6 is a schematic diagram illustrating a control process of a signal processing unit in a motor control system provided by the present disclosure;

FIG. 7 is an architectural block diagram illustrating a circuit system in the third embodiment provided by the present disclosure; and

FIG. 8 is a test pattern illustrating a current of the motor in an energy recovery process of a circular saw provided by the present disclosure.

## DETAILED DESCRIPTION

The present disclosure will be described below in detail in conjunction with the accompanying drawings and specific embodiments.

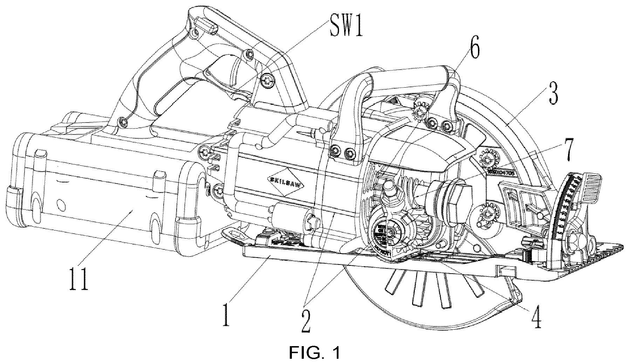

In the first embodiment of the present disclosure, in conjunction with FIG. 1, the present disclosure provides a circular saw, whose specific structure includes: a bottom plate 1; a housing 2, mounted on the bottom plate; a saw blade cover 3, connected to the housing; a saw blade shaft 4, configured to support the rotation of a saw blade in the saw blade cover to cut a workpiece; a motor, disposed in the housing and including a stator and a rotor; a motor shaft 6, driven by the rotor of the motor; and a transmission device 7, configured to connect the motor shaft and the saw blade shaft to transfer a rotational motion of the motor shaft to the saw blade shaft so as to drive the saw blade to operate. In one embodiment, the transmission device may include a deceleration mechanism, such as a worm gear and a worm that are meshed with each other, or a deceleration gearbox. The worm gear-and-the worm or deceleration gearbox may include gear structures with different gear ratios or synchronous belt transmission structures with different radii of synchronous wheels. In one embodiment of the present disclosure, the motor is a brushless motor.

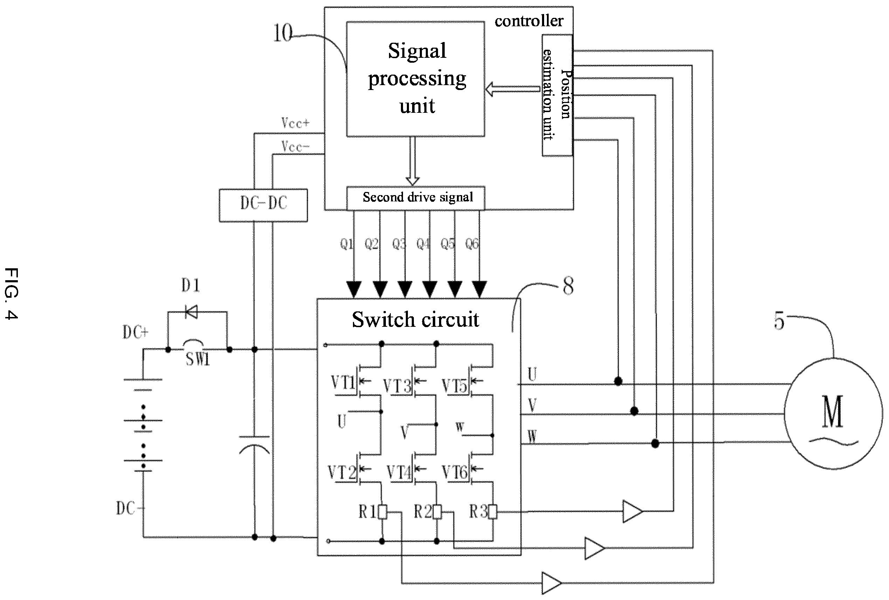

The operation of the circular saw further relies on electronic components mounted on a printed circuit board (PCB), where the PCB is accommodated in the housing 2. With reference to FIG. 4, in one embodiment, the PCB includes a drive circuit, a control unit, and a power supply circuit. The drive circuit includes a switching circuit 8 and may further include a peripheral circuit such as a drive chip, so as to improve a load capacity of the switching circuit 8. In one embodiment, the control unit may be implemented by one controller or a combination of a plurality of controllers, and in another embodiment, the control unit includes a position estimation unit and a signal processing unit 10.

According to the invention, the power supply of the circular saw is arranged to be a battery pack 11. The battery pack supplies power to the motor, the drive circuit, and the signal processing unit via the specific power supply circuit, which specifically corresponds to a DC-DC in the present embodiment.

With reference to FIG. 4, the electronic components of the circular saw further include a switching device SW1 and a diode D1. The switching device is disposed on an outer surface of the housing, and connected to the drive circuit and the battery pack, respectively, and configured to generate an electrical signal to the controller in response to an operation on the circular saw, and in one embodiment, the electrical signal is a switching signal. The diode D1 is connected in parallel with the switching device SW1, and a unidirectional conductive element is turned on when the switching device SW1 is in a switch-off state, so as to feed back a sinusoidal current output by the motor to the power supply via the diode D1.

In FIG. 1, the control unit, the drive circuit, the motor 5, the power supply circuit, and the diode D1 are all enclosed by the housing 2, and are not exposed to a perspective of FIG. 1. And the specific connection relationships may refer to the subsequent description. Referring to FIG. 4, in one embodiment, the drive circuit is electrically connected to three-phase electrodes U, V and W of the motor 5 so as to drive the motor to operate. In one embodiment, the drive circuit includes a switching circuit 8, and the switching circuit 8 is configured to output a drive signal to the three-phase electrodes of the motor according to the control of the signal processing unit so as to control the rotor of the motor to operate. The drive circuit has an input terminal, an output terminal, and a sampling terminal. As shown in FIG. 4, the switching circuit 8 includes switching elements VT1, VT2, VT3, VT4, VT5 and VT6. The switching elements VT1 to VT6 take field effect transistors as examples, gate terminals of the respective switching elements are used as the input terminal of the drive circuit and electrically connected to a drive signal of the signal processing unit, respectively, and drains or sources of the respective switch elements are electrically connected to the stator of the motor, respectively. In one embodiment of the present disclosure, the drive signal includes six signals of Q1 to Q6. The switching elements VT1 to VT6 sequentially change a respective conduction state according to the drive signal output by the signal processing unit, thereby changing a voltage state that the battery pack 11 applies to a winding of the brushless motor, so as to generate an alternating magnetic field, driving the rotor of the motor to operate.

In one embodiment, in order to rotate the brushless motor, the drive circuit has a plurality of drive states. In a drive state, the stator of the motor generates a magnetic field. The signal processing unit is configured to output a corresponding control signal, according to a rotation position of the rotor of the motor, to the drive circuit to switch the drive state of the drive circuit, so that the magnetic field generated by the stator rotates to drive the rotor to rotate, thereby driving the brushless motor. In one embodiment, the rotational position of the rotor of the motor may be obtained by calculating a phase current of the motor, collected by R1 to R3, via a position estimation unit.

The signal processing unit 10 in the electronic components is configured to drive the drive circuit according to an electrical signal of the switching device SW1 located on the outer surface of the housing. And the signal processing unit includes an input terminal and a drive signal output terminal. The input terminal or the drive signal output terminal may be implemented by special interface hardware, or may merely correspond to a corresponding pin of a chip. The drive signal output terminal is connected to the input terminal of the drive circuit, and the input terminal of the signal processing unit receives the signal of the switching device, the rotation position of the rotor of the motor output by the position estimation unit, and samples of the phase current of the motor. And the signal processing unit is configured to process an operating current of the motor according to the switching signal of the switching device to generate the drive signal. Specifically, in the present embodiment, the signal processing unit is configured to process the phase current of the motor to generate the drive signal. The operating current may also be a bus current or a combination of the bus current and a phase current of the motor. The drive signal is output by the drive signal output terminal to drive the drive circuit to control the motor to output the sinusoidal current so as to drive the saw blade. The drive signal may also be generated by the signal processing unit according to the switching signal of the switching device and/or working data of the battery pack in the circular saw, and the phase current and/or the bus current. The switching circuit drives the motor to operate to output the sinusoidal current according to the drive signal, whereby an amplitude and/or a direction of the sinusoidal current is adjusted according to the drive signal.

In one embodiment of the present disclosure, the signal processing unit is configured to collect the bus current and/or the phase current of the motor, and output the drive signal to the drive circuit after the bus current and/or the phase current of the motor being processed by the signal processing unit, so that the brushless motor charges the battery pack with a charging current less than or equal to 50A. In another embodiment of the present disclosure, the signal processing unit is configured to collect the bus current and/or the phase current of the brushless motor, and output the drive signal to the drive circuit after the bus current and/or the phase current of the brushless motor being further processed by the signal processing unit, so that the brushless motor charges the battery pack with a charging current less than or equal to 50A when the brushless motor outputs the sinusoidal current.

That is, the drive signal output after being processed by the signal processing unit controls the drive circuit to feed back the current generated on the motor to the power supply via a feedback circuit, so as to charge the power supply, thereby achieving energy recovery. In one embodiment, the drive signal output after being processed by the signal processing unit controls the drive circuit to enable the motor to output the sinusoidal current and feed back the sinusoidal current to the power supply via the feedback circuit to charge the power supply, thereby achieving energy recovery.

In one embodiment, the drive signal output after being processed by the signal processing unit is sent to the drive circuit, and the drive circuit enables the motor to output the current or the sinusoidal current, so that a negative torque generated by the motor is fed back to the power supply via the feedback circuit to charge the power supply, thereby achieving energy recovery. In one embodiment of the present disclosure, as shown in FIGS. 4, 5, and 7, the drive circuit enables the motor to output a current or a sinusoidal current, and enables a current component that makes the motor generate the negative torque to be fed back to the power supply via the diode D1, so as to charge the power supply, thereby achieving energy recovery. Through the energy recovery, the number of cuttings that may be completed by the electric power reserve per watt-hour of the power supply in the circular saw is increased, thereby improving the utilization efficiency of the power supply.

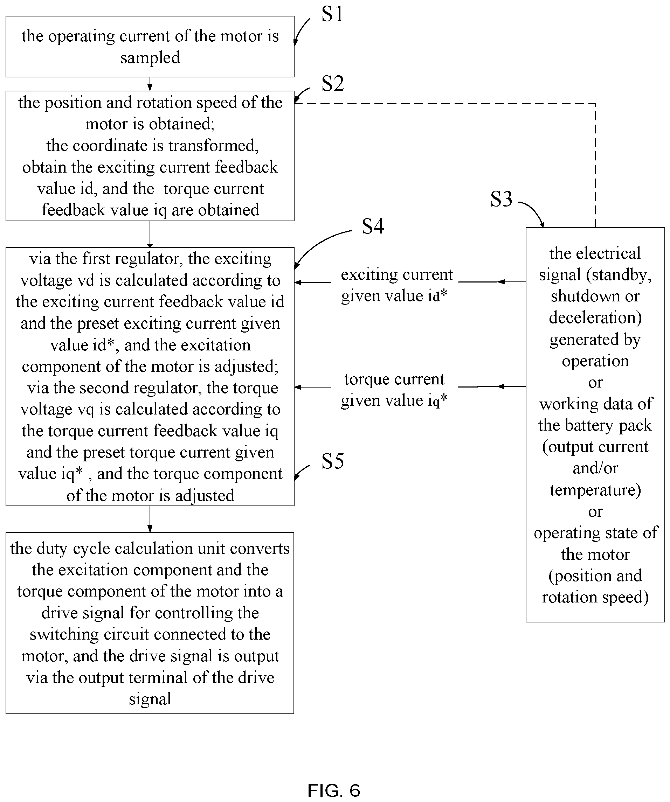

In the following, the signal processing unit shown in FIG. 4 is combined with steps shown in FIG. 6 to describe the detailed steps of the signal processing unit for processing the phase current and/or the bus current of the motor.

Referring to FIG. 6, in step S1, the signal processing unit obtains the phase current of the motor via the input terminal.

In step S2, the position of the motor is obtained by calculating the current via the position estimation unit, and a rotation speed of the motor is calculated, A coordinate transformation of the phase current of the motor is conducted by a coordinate transformation unit, and includes Clark transformation and Park transformation to obtain an exciting current feedback value id and a torque current feedback value iq.

In step S4, a current loop unit is adopted. In one embodiment, as shown in FIG. 6, a first regulator and a second regulator are used to regulate an excitation component of the motor according to the exciting current feedback value id and the preset exciting current given value id*, respectively; a torque component of the motor is adjusted according to the torque current feedback value iq and the preset torque current given value iq*. The preset exciting current given value id* and/or the preset torque current given value iq* are determined by a speed adjusting signal jointly generated by an electric signal generated by an operation on the circular saw, working data of the battery pack, and an operating state of the motor, which are received by the controller in the step S3. In one embodiment, the electrical signal generated by the operation on the circular saw may include standby, shutdown, or deceleration, which may be obtained via an on-off state of the switching device SW1, that is, the switching signal of the switching device SW1; the working data of the battery pack includes the output current of the battery pack and/or temperature of the battery pack; and the operating state of the motor includes a position and rotation speed of the motor.

The two components are adjusted by the current loop unit and then output to a duty cycle calculation unit. The duty cycle calculation unit converts the excitation component and the torque component of the motor into a drive signal for controlling the switching circuit 8 connected to the motor via step S5, and the drive signal is output via the output terminal of the drive signal; where a specific calculation process of the conversion may be implemented by first performing an inverse Park transformation, and then performing SVPWM calculation or SPWM calculation.

The present embodiment specifically aims at the phase current, but the bus current or the combination of the phase current and the bus current may also be similarly processed by the method and steps shown in FIG. 6 by replacing the working current of the motor in FIG. 6 to achieve similar drive signals..

According to the drive signal, on/off of the switching elements in the switching circuit shown by TV1 to TV6 on an upper side of FIG. 4 is controlled to realize power supply to coils of each phase in the motor. Therefore the motor outputs the sinusoidal current, which drives the motor in the circular saw to operate in accordance with the current direction and amplitude requirements of the operation on the circular saw and the working data of the battery pack.

In one embodiment, the drive signal may be designed as duty cycle data, which controls the drive circuit. In one embodiment, a switching circuit therein controls energizing time of the windings in the motor according to the drive signal, and turns on the winding of the corresponding phase according to the drive signal, so that a regularly changing magnetic field is generated to drive the rotor of motor to operate. In one embodiment, the drive signal may be duty cycle data of the motor. For the duty cycle data, the larger the ratio of conduction time is, the greater the magnetic field strength in the motor is, and the faster the rotor of the motor operates. When the motor operates, due to inductive effect of the winding thereof, the motor outputs the sinusoidal current. Adjusted by the duty cycle data, the amplitude and/or the direction of the sinusoidal current is limited by the switching signal of the switching device SW1 and/or the working data of the battery pack in the power tool. In one embodiment, in a standby state, the signal processing unit generates the drive signal to drive the motor to operate to output sinusoidal current with an amplitude in a standby gear, and in the standby gear, the rotation speed of driving the motor to operate is maintained at a low speed relative to the working state; in a shutdown or deceleration state, the signal processing unit generates the drive signal to drive the motor to operate to output the sinusoidal current to the battery pack. When the working data of the battery pack is abnormal, or when a control signal for the power tool received by the signal processing unit is a shutdown signal or deceleration signal, the signal processing unit generates the drive signal to drive the motor to operate to output sinusoidal current with a decreasing amplitude, until the abnormal working data of the battery pack is eliminated. The abnormal working data of the battery pack includes excessively large output current of the battery pack and/or excessively high temperature of the battery pack.

In one embodiment, in the signal processing unit, the above-mentioned control may correspond to the above-mentioned speed adjusting requirements according to the working data of the battery pack in the power tool and/or the electric signal received by a control interface of the motor by setting the excitation current given value id* and the torque current given value iq*, and limiting the current of the motor, shutdown, deceleration, energy recovery, no-load and low-speed standby, and so forth are included. The specific setting steps are performed as follows to achieve control of the amplitude and flow direction of the sinusoidal current output by the motor.

In one example, when the signal processing unit acquires that the power tool enters the standby state, the signal processing unit generates the drive signal to drive the motor to operate to output the sinusoidal current with the amplitude value in the standby gear. A plurality of manners to enter the standby state are provided, for example, the switching device SW1 may be triggered to enter the standby state by manual set, or a short period of time immediately after triggering the working state is in the standby state by default, and then comes the working state. In one embodiment, in the standby gear, an absolute value of the excitation current given value id* is limited, or an absolute value of the torque current value given iq* is also limited, and the drive signal is generated after conversion by the duty cycle calculation unit to control the rotation speed at which the amplitude of the sinusoidal current in the standby gear drives the motor to operate, thereby being controlled to be less than the rotation speed at which the amplitude of the sinusoidal current in the working state drives the motor to operate.

When the signal processing unit receives the abnormal working data of the battery pack in the power tool received by the signal processing unit, including the excessively high temperature or excessively large current, or when the signal processing unit receives that the power tool enters the shutdown or deceleration state, the signal processing unit generates the drive signal to drive the motor to operate to output the sinusoidal current with a decreasing amplitude , until the abnormal working data of the battery pack is eliminated. In one embodiment, driving the amplitude of the sinusoidal current to decrease may be achieved by decreasing the torque current feedback value iq and/or the torque current given value iq*; or by setting a excitation current given value id* vector to be negative. The magnetic field of the motor may be counteracted in the algorithm by such setting, thereby reducing the power supply of the motor, such as the current output by the battery pack, thereby effectively adjusting the power consumption of the power tool. The direct regulation for the current in the circuit is difficult to be achieved in the field of conventional power tools.

When the signal processing unit receives that the power tool enters the shutdown or the deceleration state, the signal processing unit generates the drive signal to drive the motor to operate to output the sinusoidal current to the battery pack. Such an effect can be specifically controlled by setting the torque current given value iq* vector to be negative, and the excitation current given value i * may also be set to 0 at the same time. As a result, the torque of the motor is counteracted in the algorithm, thereby reducing driving capability of the motor, and effectively reducing the operating speed of the motor. At the same time, the switch triggered by a shutdown or deceleration command, SW1 in FIG. 4 may also be placed in the switch-off state while the torque current given value iq* vector is set to negative. Therefore, the current of the motor will pass through the unidirectional conductive element, for example, the diode D1 in FIG. 4 feeds back the negative current to the battery pack to charge the battery pack.

During the charging process, the signal processing unit outputs the drive signal to control the drive circuit, and the drive circuit controls the sinusoidal current output by the motor, and then magnitude of the negative torque generated by the motor from the sinusoidal current is controlled. Therefore, when the generated negative torque current component of the motor is fed back to the power supply via the diode D1, the magnitude of the current for charging the power supply may be limited to a current range in which the battery is effectively charged, thereby protecting the battery and achieving energy recovery.

In one embodiment, the signal processing unit may generate a corresponding drive signal by controlling the torque current feedback value iq and/or the torque current given value iq*, and the drive signal controls the switching circuit to drive the motor to operate, and then the amplitude and flow direction of the sinusoidal current output by the motor are controlled so that the converted charging current flows to the battery pack within an acceptable range of the battery pack, thereby achieving effective charging and protecting the battery pack. For the charging current:

when an impact time of the charging current does not exceed 200ms, a maximum impact current (charging current) may be controlled at 6c or below;

when the impact time of the charging current does not exceed 1ms, the maximum impact current (charging current) may be controlled at 5c or below; and

when the impact time of the charging current reaches 1s or more, the maximum impact current (charging current) may be controlled at 4c or below.

The relationship between the magnitude of the maximum impact current and the number p of the battery packs connected in parallel is: number (p) × capacity (Ah) of each battery pack = amperage (A) of the maximum impact current. For example, for a number 1p of battery packs with a capacity of 2.5Ah, the current corresponding to the maximum impact current 6c is 15A; for a number 2p of battery packs with a capacity of 2.5Ah, and the current corresponding to the maximum impact current 6c is 30A.

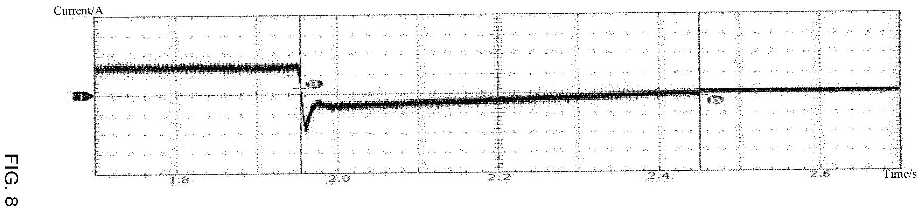

Referring to FIG. 8, during the energy recovery process, the circular saw having the worm gear and worm structure as the transmission device tests out the current data of the motor indicated by reference numeral 1. The impact process of the charging current is between two points a and b, the impact time of the charging current is within 496 ms, and the maximum impact current is 4.8 A. Taking a 48V DC power supply as an example, the energy recovered by the present charging current corresponds to 0.02wh.

The above-mentioned manners may actually be applied to any power tool to achieve control for the sinusoidal current output by the operation of the motor inside the power tool, according to the different working states of the motor, such as standby, deceleration, shutdown, and energy recovery, and through the processing for the phase current and/or the bus current of the motor by the signal processing unit. In one example, controlling the direction and amplitude of the sinusoidal current is included. In one example, the above-mentioned manners are applied to the circular saw. Because the excitation component and torque component of the motor is adjusted by the signal processing unit, the energy consumption level may be dynamically adjusted according to the state of the power tool, and the energy of the motor may be recovered when needed. Therefore, the utilization rate of electric power of the power tools described in the present disclosure has been significantly improved. In one example, the circular saw may recover at least 0.01wh of energy each time through power control or energy recovery, and utilize the capacity per watt-hour of the battery pack to achieve a number of more than 0.9 cuttings during the cutting process. At the same time, since the charging current to the power supply during the control of energy recovery is not greater than 50A, excessive impact on the power supply is avoided and the power supply is protected.

Referring to a lower side of FIG. 4, the above-mentioned manners, specifically, merely take collecting the phase current of the motor as an example. The collection of the phase current of the motor may be realized by resistors R1 to R3 connected in series on three bridge arms formed by the switching elements VT1 to VT6 in the switching circuit shown in the lower side of FIG. 4. The resistors R1 to R3 connected in series on the three bridge arms convert the phase current of the motor into a sampled voltage signal, and the sampled voltage signal is amplified via an amplifier, and input to the controller to realize the collection of the phase current of the motor.

It should be noted that the current signal collected by the controller may include, the phase current in the present embodiment, any one, any number, any combination, or any number of combinations of the inter-electrode current of the switching elements on the switching circuit connected to the motor and the bus current of the motor. Certainly, those skilled in the art may also perform similar processing directly through a sampling resistor connected in series to the bus connected to a lower arm of the switching circuit 8, or directly analyze the inter-electrode current of the switching element such as VT2 through an algorithm to match correction functions based on characteristics of the component, or the above-mentioned methods may be comprehensively applied, where operation condition of the motor may be obtained by the same analysis. The sampling of the bus current of the motor will be analyzed in the next embodiment.

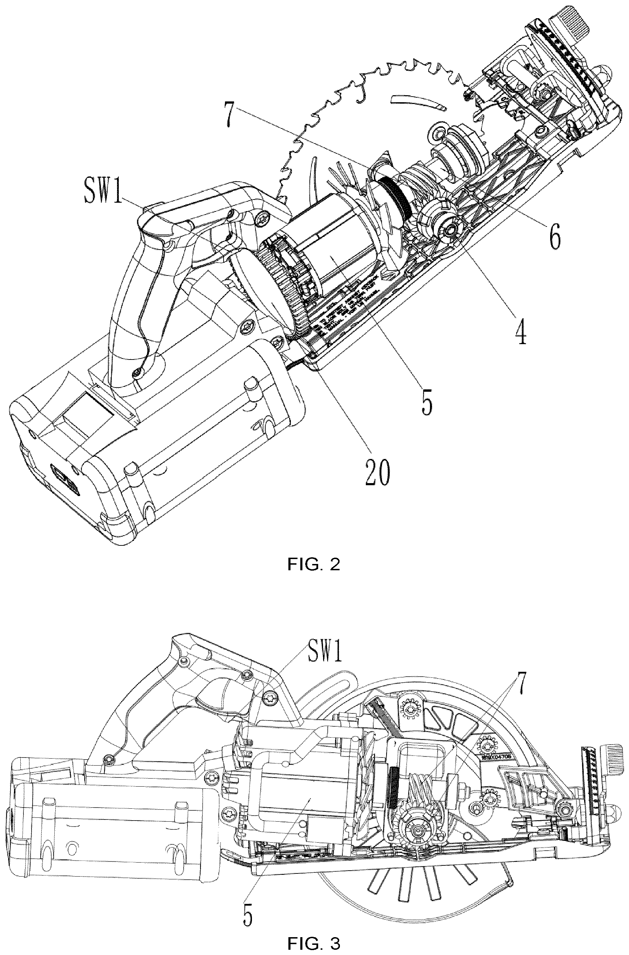

In the second embodiment of the present disclosure, in conjunction with FIG. 2, the present disclosure further provides a circular saw, whose specific structure includes:

a motor 5, having a stator and a rotor; a motor shaft 6, driven by the rotor of the motor; a saw blade shaft 4, configured for supporting a saw blade to rotate to perform a cutting operation on a workpiece; and a transmission device, configured for connecting the motor shaft to the saw blade shaft.

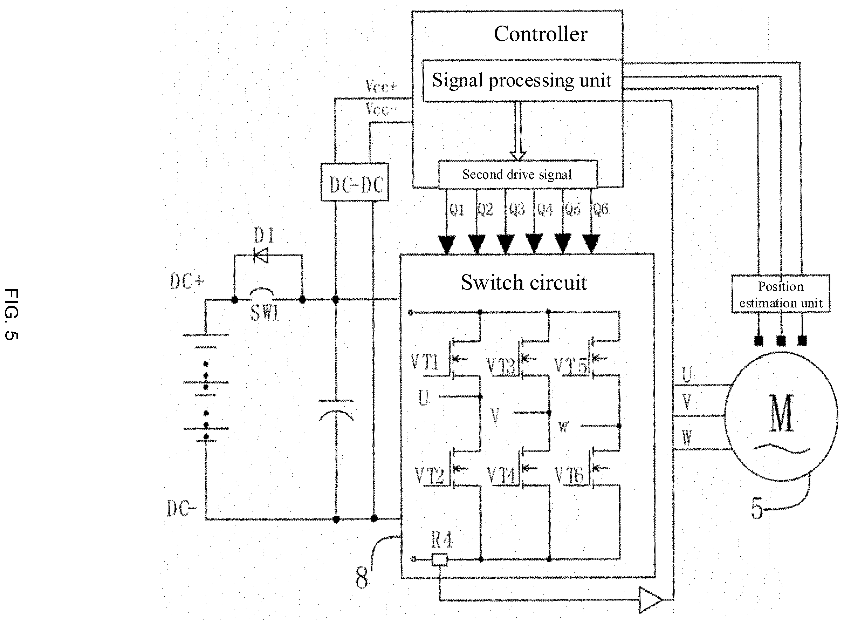

The operation of the circular saw further relies on electronic components mounted on a printed circuit board (PCB), where the PCB is mounted behind the motor 5. With reference to FIG. 5, the PCB 20 in the present embodiment may include a switching circuit 8, a controller, a position sensor and a power circuit. The controller includes a signal processing unit 10. The position sensor is mounted on the stator of the motor 5 and configured to sense a position of the rotor and output a position signal of the rotor of the motor to the controller.

The power supply of the circular saw may be arranged to be a battery pack 11 or other power supply device. Through a specific power supply circuit specifically corresponding to a DC-DC in the present embodiment, the power supply supplies power to the motor, the switching circuit, and the signal processing unit. The controller or the signal processing unit may be implemented by selecting an appropriate control chip according to the precision and response time required for the control of the circular saw. The control chip includes a Microcontroller Unit (MCU), an Advanced RISC Machines (ARM) chip, a Digital Signal Processor (DSP), and the like.

With reference to FIG. 5, the PCB of the circular saw is further connected to a switching device SW1 and a unidirectional conductive element D1. The switching device is connected to the drive circuit and the power supply, and is configured to generate a corresponding signal to the controller in response to an operation on the circular saw. In one embodiment, the unidirectional conductive element D1 may be arranged to be a diode D1, a thyristor, and the like. Taking the diode D1 as an example, the diode D1 is connected in parallel with the switching device SW1. The unidirectional conductive element is turned on when the switching device SW1 is in a switch-off state, so as to feed back the sinusoidal current output by the motor to the power supply via the diode D1. The implementation of the thyristor is similar to that of the diode D1, as long as the current between the pins in the thyristor used for unidirectional conduction is ensured to be fed back to the power supply.

With reference to FIG. 5, a specific manner in which the switching circuit drives the motor 5 is similar to that of the first embodiment, and details are not described herein. The difference between the present embodiment and the first embodiment is as follows, the rotation position of the rotor of the motor may be directly obtained through the position sensor and transmitted to the controller. Therefore, a position estimation unit is not necessary to be provided in the controller in the present embodiment. The controller generates the drive signal according to the position of the rotor of the motor obtained by the position sensor and the bus current obtained by a sampling resistor R4, and sends the drive signal to the drive circuit to enable the drive circuit switch the drive state, thereby rotating the magnetic field generated by the stator to drive the rotor to rotate, so that the brushless motor is driven. Thereby, the motor outputs the sinusoidal current to drive the saw blade. The drive signal may also be generated in a manner similar to that of the first embodiment by the signal processing unit according to the switching signal of the switching device and/or the working data of the battery pack in the power tool, and the bus current obtained by sampling. The detailed steps of the signal processing unit processing the bus current of the motor to generate the drive signal, and the controlling the amplitude and/or the flow direction of the sinusoidal current by the drive signal are similar to those in the previous embodiment. When the bus current of the motor is processed to generate the drive signal, the bus current obtained by sampling is used as the working current of the motor, and the processing steps may refer to FIG. 6. The difference between the present embodiment and the first embodiment is only the step of identifying the position and the rotation speed of the motor, which may be implemented by directly acquiring the data of the position sensor in the present embodiment through the controller.

The above-mentioned manners may achieve control for the sinusoidal current, including the flow direction and amplitude thereof, output by the operation of the motor inside the power tool, according to the different working states of the motor, such as standby, deceleration, shutdown, and energy recovery, and through the processing for the phase current and/or the bus current of the motor by the signal processing unit. In one example, the above-mentioned manners are applied to the circular saw. Because the excitation component and torque component of the motor is adjusted by the signal processing unit, the energy consumption level may be dynamically adjusted according to the state of the circular saws, and in the process of deceleration and shutdown, the current is introduced to the power supply via the unidirectional switching element to recover energy of the motor. In one example, since the signal processing unit outputs the drive signal to control the drive circuit, the sinusoidal current output by the motor is controlled via the drive circuit, thereby controlling the magnitude of the current with the negative torque generated by the sinusoidal current, and realizing the control of the amplitude and direction of the current of the motor. The present disclosure may control the current introduced to the power supply to be within the effective charging current range of 50A, and ranges of 0A to 20A, 20A to 35A, 35A to 50A may be selected to ensure charging efficiency and protect the power supply.

Therefore, the utilization rate of electric power of the circular saw described in the present disclosure has been significantly improved. In one example, through the power control or energy recovery, the capacity per watt-hour of the battery pack of the circular saw described in the present disclosure achieves a number of cuttings of more than 0.9 cuttings, and the charging current to the power supply is ensured to be equal to or less than 50A during each recovery process, so that excessive impact on the power supply is avoided, and the power supply is protected. Compared to the current number of cuttings of 0.8 cuttings per watt-hour of the circular saw, the present embodiment improves the working capacity of the circular saw by 20%. That is to say, with the power supply of the same specification, the circular saw in the present embodiment may complete an additional 20% of cutting operations. And the increase in efficiency is still considerable. The number of cuttings obtained here, such as at least 0.9 to 1.0 cuttings per watt-hour, 1.0 to 1.2 cuttings per watt-hour, 1.2 to 1.4 cuttings per watt-hour, and 1.4 to 1.6 cuttings per watt-hour, are obtained by cutting pine wood, and when the pine wood is cut, a size of a cutting surface is 40mm × 200 mm.

In a third embodiment of the present disclosure, in conjunction with FIG. 3, the present disclosure further provides a hand-held power tool, whose specific structure includes:

a motor 5 having a stator and a rotor; a transmission device 7, operatively coupled to the rotor and configured to transmit a rotary motion of the rotor of the motor to a tool accessory of the hand-held power tool, so as to drive the tool accessory to operate.

The tool accessorie here include, but is not limited to, a drill bits of an electric drill, an abrasive disc of an angle grinder, a cutter lifting mechanism of a reciprocating saw, a saw stripe, a saw blade of a circular saw, a sponge or a polishing disc of a polishing machine, a screw head of a screwdriver, a spiral groove of a spanner, an impact mechanism, a stirring rod of a mixer, etc. Therefore, the power tool described in the present embodiment may correspond to the circular saw, the electric drill, the angle grinder, the reciprocating saw, the polishing machine, the screwdriver, the spanner, the mixer, etc.

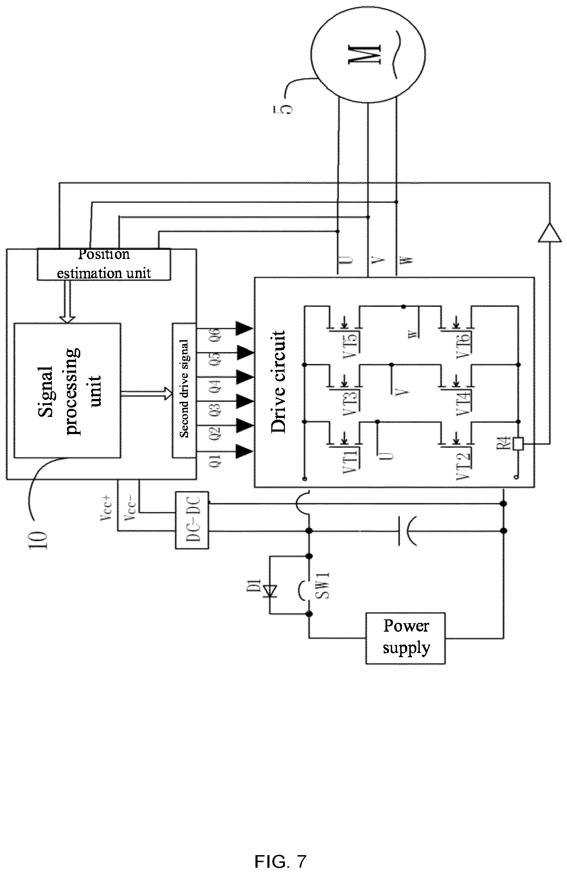

The operation of the hand-held power tool further relies on electronic components mounted on a printed circuit board (PCB), where the PCB may be disposed behind the motor 5. In one embodiment, with reference to FIG. 7, a drive circuit, a controller, and a power supply circuit are included. The controller includes a position estimation unit and a signal processing unit 10.

The power supply of the hand-held power tool supplies power to the motor, the drive circuit, and the signal processing unit via the specific power supply circuit. In the present embodiment, the power supply specifically corresponds to a DC-DC, and may include a power chip and peripheral circuits thereof.

With reference to FIG. 7, the electronic components of the hand-held power tool further include a switching device SW1 and a diode D1. The switching device is connected to the drive circuit and the power supply, and configured to generate an electrical signal to the controller in response to an operation on the hand-held power tool by the user. The diode D1 is connected in parallel with the switching device SW1. A positive electrode of the diode D1 is connected to the drive circuit and a negative electrode of the diode D1 is connected to the power supply. The diode D1 is turned on when the switching device SW1 is in a switch-off state, and feeds back a sinusoidal current output by the motor to the power supply.

With reference to FIG. 7, a manner in which the drive circuit drives the motor 5 to operate is similar to that of the above embodiments, and details are not described herein again.

The difference between the present embodiment and the above embodiments is that in the present embodiment, the rotation position of the rotor of the motor based on which the signal processing unit generates the drive signal is specifically calculated and obtained by the position estimation unit through the bus current of the motor collected by the resistor R4 on the bus of the drive circuit.

The calculation of the position and the speed of the motor by the position estimation unit may be realized by the following steps.

In step B1, the zero-crossing period of the working current of the motor is locked, and a frequency f of a working current of the motor is calculated; where the working current, here specifically, refers to the bus current of the motor collected by the resistor R4 of the bus of the drive circuit; certainly, the working current of the motor may further include a phase current and/or a bus current and combinations thereof of the motor collected in the above embodiments, and the processing process is similar;

In step B2, the rotation speed of the motor is calculated by a function of $n = 60f / P$; where P is a number of electrode pairs of the motor;

In step B3, a position $= \frac{1}{s} \int \omega dt$ of the motor, which is equal to $\frac{1}{s} \omega dt$ is obtained by integration; where s is a number of sampling points of the motor; and $\omega$ is an angular frequency corresponding to the frequency f of the working current of the motor.

Different from the traditional method of first calculating a position of the motor and then obtaining a speed of the motor by differentiating the position, calculating the position and the speed of the motor by the above manners may avoid a huge calculation amount brought by the differentiation, saving overhead of the system and improving the calculation efficiency.

The controller generates the drive signal according to the position of the rotor of the motor calculated by the position estimation unit and the bus current obtained by the sampling resistor R4, and sends the drive signal to the drive circuit to enable the drive circuit switch the drive state, thereby rotating the magnetic field generated by the stator to drive the rotor to rotate, so that the brushless motor is driven. Thereby, the motor outputs the sinusoidal current to drive the saw blade. The drive signal may also be generated in a manner similar to that of the first embodiment by the signal processing unit according to the signal of the switching device SW1 and/or the working data of the battery pack in the power tool, and the bus current obtained by sampling. The detailed steps of the signal processing unit processing the bus current of the motor to generate the drive signal, and the controlling the amplitude and/or the flow direction of the sinusoidal current by the drive signal are similar to those in the above embodiments. When the drive signal is generated by processing the bus current of the motor, the bus current obtained by sampling is used as the working current of the motor, and the corresponding processing steps may also refer to FIG. 6.

Therefore, according to different working states of the motor, including standby, deceleration, shutdown, and energy recovery, the signal processing unit may process the phase current and/or the bus current of the motor to output the drive signal to control the drive circuit, and the sinusoidal current output by the motor is controlled by the drive circuit, thereby controlling the magnitude of the negative torque generated by the motor due to the sinusoidal current. Thereby, the sinusoidal current output by the operation of the motor in the power tool is controlled. When the negative torque current component generated by the motor is fed back to the power supply via the diode D1, the flow direction and the amplitude of the charging current to the power supply are limited, thereby realizing energy recovery and protection of the power supply during energy recovery. In one example, through the adjustment on the excitation component and torque component of the motor by the signal processing unit, the energy consumption level may be dynamically adjusted according to the state of the power tool, and in the process of deceleration and shutdown, the current is introduced to the power supply via the unidirectional conductive element similar to the diode D1. In the case of using a worm gear and a worm that are meshed with each other as the transmission device 7, the energy recovered each time the current is introduced to the power supply is more than 0.01 wh. Therefore, the utilization rate of electric power of the power tool described in the present disclosure has been significantly improved. In one example, through power control or energy recovery, the power tool described in the present disclosure may increase the operating capacity by an additional 20%, when equipped with a power supply of an identical specification, that is, under an identical load condition, a tool life is extended to 1.2 times the length of the original.

## INDUSTRIAL APPLICABILITY

The present disclosure provides a circular saw. By optimizing a processing for the phase current and/or the bus current of the motor, the current of the motor in the circular saw may be independently adjusted, and the electric energy generated by the motor is fed back to the power supply to optimize the utilization efficiency of the power supply, making the power consumption characteristics of circular saws and other power tools better.

## Claims

1. A circular saw, comprising:

   a brushless motor (5), comprising a stator and a rotor;
   a motor shaft (6), configured to be driven by the rotor of the brushless motor;
   a saw blade shaft (4), configured for supporting a saw blade to perform a cutting operation on a workpiece;
   a transmission device (7), configured to connect the motor shaft to the saw blade shaft;
   a control unit, configured to output a first drive signal to control the rotor of the brushless motor to operate;
   a drive circuit, configured to drive the brushless motor according to the first drive signal generated by the control unit; and
   a power supply, arranged to be a battery pack(11), configured to supply power to the brushless motor, the drive circuit, and the control unit; **characterized in that**
   the control unit comprises a signal processing unit (10), the signal process unit is configured to collect a bus current and/or a phase current of the brushless motor, and output a second drive signal to the drive circuit after the bus current and/or the phase current of the brushless motor being processed by the signal processing unit, and the drive circuit is configured to control the brushless motor to output a sinusoidal current, so that the brushless motor charges the power supply with a charging current less than or equal to 50A.

2. The circular saw of claim 1, wherein the transmission device comprises a worm wheel and a worm that are meshed with each other.

3. The circular saw of claim 1, further comprising a diode (D1), configured for feeding back a current of the brushless motor to the power supply via the diode (D1)

**4.** The circular saw of claim 1, further comprising a diode (D1) and a switching device (SW1);

> wherein the switching device is connected between the drive circuit and the power supply, and configured to generate a switching signal in response to an operation of a user on the circular saw;
> wherein the diode (D1) is connected in parallel with the switching device, and turned on in response to the switching device being in a switch-off state, and in response to the diode D1 being turned on, the sinusoidal current output by the brushless motor is fed back to the power supply by the drive circuit.

**5.** The circular saw of claim 1, wherein after being processed by the signal processing unit, the second drive signal is output to the drive circuit, so that the brushless motor charges the power supply with a charging current within a range from 35A to 50A.

**6.** The circular saw of claim 1, wherein after being processed by the signal processing unit, the second drive signal is output to the drive circuit, so that the brushless motor charges the power supply with a charging current within a range from 20A to 35A.

**7.** The circular saw of claim 1, wherein the control unit further comprises a position estimation unit, the position estimation unit is configured to obtain a position of the rotor of the brushless motor according to a terminal voltage and/or a current on a phase line of the brushless motor, and the second drive signal is generated according to the position of the rotor of the brushless motor.

**8.** The circular saw of claim 1, wherein a position sensor is further provided adjacent to the brushless motor, and the control unit is further electrically connected to the position sensor, and configured to obtain a position of the rotor of the brushless motor according to a signal of the position sensor, and the second drive signal is generated according to the position of the rotor of the brushless motor.

**9.** The circular saw of claim 1, further comprising a unidirectional conductive element, wherein the switching device is connected between the drive circuit and the battery pack, the unidirectional conductive element is connected in parallel with the switching device, and a current flows from the drive circuit to the battery pack in response to the unidirectional conductive element being turned on.

**Patentansprüche**

**1.** Kreissäge, umfassend:

> einen bürstenlosen Motor (5), der einen Stator und einen Rotor umfasst;
> eine Motorwelle (6), die für den Antrieb durch den Rotor des bürstenlosen Motors ausgelegt ist;
> eine Sägeblattwelle (4), die zum Halten eines Sägeblattes ausgelegt ist, um einen Schneidvorgang an einem Werkstück auszuführen;
> eine Übertragungsvorrichtung (7), die zum Verbinden der Motorwelle mit der Sägeblattwelle ausgelegt ist;
> eine Steuereinheit, die zum Ausgeben eines ersten Antriebssignals ausgelegt ist, um den Rotor des bürstenlosen Motors zu betreiben;
> eine Antriebsschaltung, die zum Antreiben des bürstenlosen Motors entsprechend dem ersten Antriebssignal ausgelegt ist, das durch die Steuereinheit erzeugt wird; und
> eine Stromversorgung, die als Batteriesatz (11) angeordnet und zum Versorgen des bürstenlosen Motors, der Antriebsschaltung und der Steuereinheit mit Strom ausgelegt ist; **dadurch gekennzeichnet, dass**
> die Steuereinheit eine Signalverarbeitungseinheit (10) umfasst, die Signalverarbeitungseinheit dafür ausgelegt ist, einen Busstrom und/oder einen Phasenstrom des bürstenlosen Motors zu erfassen, und ein zweites Antriebssignal an die Antriebsschaltung auszugeben, nachdem der Busstrom und/oder der Phasenstrom des bürstenlosen Motors durch die Signalverarbeitungseinheit verarbeitet wurde, und die Antriebsschaltung zum Steuern des bürstenlosen Motors für die Ausgabe eines sinusförmigen Stroms ausgelegt ist, sodass der bürstenlose Motor die Stromversorgungseinrichtung mit einem Ladestrom belastet, der kleiner oder gleich 50 A ist.

**2.** Kreissäge nach Anspruch 1, wobei die Übertragungsvorrichtung ein Schneckenrad und eine Schnecke umfasst, die miteinander verzahnt sind.

**3.** Kreissäge nach Anspruch 1, die ferner eine Diode (D1) umfasst, welche dafür ausgelegt ist, einen Strom des bürstenlosen Motors über die Diode (D1) an die Stromversorgung zurückzuführen.

**4.** Kreissäge nach Anspruch 1, die ferner eine Diode (D1) und ein Schaltgerät (SW1) umfasst;

> wobei das Schaltgerät zwischen der Antriebsschaltung und der Stromversorgungseinheit angeschlossen ist und zum Erzeugen eines Schaltsignals als Reaktion auf eine Aktion eines Benutzers an der Kreissäge ausgelegt ist; wobei die Diode (D1) parallel zu der Schaltvorrichtung angeschlossen ist und als Reaktion darauf, dass sich die Schaltvorrichtung in einem Ausschaltzustand befindet, eingeschaltet wird, und als Reaktion darauf, dass die Diode (D1) eingeschaltet wird, der von dem bürstenlosen Motor ausgegebene sinusförmige Strom durch die Antriebsschaltung in die Stromversorgung zurückgeführt wird.

5. Kreissäge nach Anspruch 1, wobei das zweite Antriebssignal nach der Verarbeitung durch die Signalverarbeitungseinheit an die Antriebsschaltung ausgegeben wird, sodass der bürstenlose Motor die Stromversorgungseinheit mit einem Ladestrom im Bereich von 35 A bis 50 A belastet.

6. Kreissäge nach Anspruch 1, wobei das zweite Antriebssignal nach der Verarbeitung durch die Signalverarbeitungseinheit an die Antriebsschaltung ausgegeben wird, sodass der bürstenlose Motor die Stromversorgungseinheit mit einem Ladestrom im Bereich von 20 A bis 35 A belastet.

7. Kreissäge nach Anspruch 1, wobei die Steuereinheit ferner eine Positionsbestimmungseinheit umfasst, und die Positionsbestimmungseinheit dafür ausgelegt ist, eine Position des Rotors des bürstenlosen Motors entsprechend einer Klemmenspannung und/oder einem Strom in der Phasenleitung des bürstenlosen Motors zu ermitteln.

8. Kreissäge nach Anspruch 1, wobei ein Positionssensor ferner direkt neben dem bürstenlosen Motor vorgesehen ist, und die Steuereinheit ferner elektrisch mit dem Positionssensor verbunden und dafür ausgelegt ist, eine Position des Rotors des bürstenlosen Motors entsprechend einem Signal des Positionssensors zu ermitteln, und das zweite Antriebssignal entsprechend der Position des Rotors des bürstenlosen Motors erzeugt wird.

9. Kreissäge nach Anspruch 1, die ferner ein unidirektional leitfähiges Element umfasst, wobei die Schaltvorrichtung zwischen der Antriebsschaltung und dem Batteriesatz angeschlossen ist, das unidirektional leitfähige Element parallel zur Schaltvorrichtung angeschlossen ist, und ein Strom von der Antriebsschaltung zum Batteriesatz als Reaktion darauf, dass das unidirektional leitfähige Element eingeschaltet wird, fließt.

## Revendications

1. Scie circulaire, comprenant :

un moteur sans balais (5), comprenant un stator et un rotor ;
un arbre moteur (6) configuré pour être entraîné par le rotor du moteur sans balais ;
un arbre de lame de scie (4) configuré pour supporter une lame de scie pour exécuter une opération de coupe sur une pièce ;
un dispositif de transmission (7), configuré pour connecter l'arbre moteur à l'arbre de lame de scie ;
une unité de commande, configurée pour émettre un premier signal d'entraînement pour commander le rotor du moteur sans balais à fonctionner ;
un circuit d'entraînement, configuré pour entraîner le moteur sans balais selon le premier signal d'entraînement généré par l'unité de commande ; et
une alimentation électrique, agencée pour être un pack de batteries (11), configurée pour fournir du courant électrique au moteur sans balais, au circuit d'entraînement, et à l'unité de commande ; **caractérisé en ce que**
l'unité de commande comprend une unité de traitement du signal (10), l'unité de traitement du signal est configurée pour collecter un courant de bus et/ou un courant de phase du moteur sans balais, et émettre un second signal d'entraînement vers le circuit d'entraînement après que le courant de bus et/ou le courant de phase du moteur sans balais a été traité par l'unité de traitement du signal, et le circuit d'entraînement est configuré pour commander le moteur sans balais à émettre un courant sinusoïdal de façon à ce que le moteur sans balais charge l'alimentation électrique avec un courant de chargement inférieur ou égal à 50A.

2. Scie circulaire selon la revendication 1, dans laquelle le dispositif de transmission comprend une roue à vis sans fin et une vis sans fin qui sont engrenées l'une avec l'autre.

3. Scie circulaire selon la revendication 1, comprenant en outre une diode (D1) configurée pour renvoyer un courant du moteur sans balais vers l'alimentation électrique par le biais de la diode (D1).

4. Scie circulaire selon la revendication 1, comprenant en outre une diode (D1) et un dispositif de commutation (SW1) ;

dans laquelle le dispositif de commutation est connecté entre le circuit d'entraînement et l'alimentation électrique, et configuré pour générer un signal de commutation en réponse à un fonctionnement d'un utilisateur sur la scie circulaire ;
dans laquelle la diode (D1) est connectée en parallèle avec le dispositif de commutation, et mise en route en réponse au dispositif de commutation étant en état d'arrêt, et en réponse à la mise en route de la diode (D1), le courant sinusoïdal émis par le moteur sans balais est renvoyé vers l'alimentation électrique par le circuit d'entraînement.

5. Scie circulaire selon la revendication 1, dans laquelle, après le traitement par l'unité de traitement du signal, le second signal d'entraînement est émis vers le circuit d'entraînement de façon à ce que le moteur sans balais charge l'alimentation électrique avec un courant de charge situé dans une plage de 35A à 50A.

6. Scie circulaire selon la revendication 1, dans laquelle, après le traitement par l'unité de traitement du signal, le second signal d'entraînement est émis vers le circuit d'entraînement de façon à ce que le moteur sans balais charge l'alimentation électrique avec un courant de charge situé dans la plage de 20A à 35A.

7. Scie circulaire selon la revendication 1, dans laquelle l'unité de commande comprend en outre une unité d'estimation de position, l'unité d'estimation de position est configurée pour obtenir une position du rotor du moteur sans balais selon une tension aux bornes et/ou un courant sur une ligne de phase du moteur sans balais, et le second signal d'entraînement est généré selon la position du rotor du moteur sans balais.

8. Scie circulaire selon la revendication 1, dans laquelle un capteur de position est en outre prévu adjacent au moteur sans balais, et l'unité de commande est en outre reliée électriquement au capteur de position, et configuré pour obtenir une position du rotor du moteur sans balais selon un signal du capteur de position, et le second signal d'entraînement est généré selon la position du rotor du moteur sans balais.

9. Scie circulaire selon la revendication 1, comprenant en outre un élément conducteur unidirectionnel, dans lequel le dispositif de commutation est connecté entre le circuit d'entraînement et le pack de batteries, l'élément conducteur unidirectionnel est connecté en parallèle au dispositif de commutation, et un courant circule du circuit d'entraînement vers le pack de batteries en réponse à la mise en marche de l'élément conducteur unidirectionnel.

FIG. 1

FIG. 2

FIG. 3

FIG. 4

FIG. 5

S1

the operating current of the motor is sampled

S2

the position and rotation speed of the motor is obtained;
the coordinate is transformed, obtain the exciting current feedback value id, and the torque current feedback value iq are obtained

S4

S3

via the first regulator, the exciting voltage vd is calculated according to the exciting current feedback value id and the preset exciting current given value id*, and the excitation component of the motor is adjusted;
via the second regulator, the torque voltage vq is calculated according to the torque current feedback value iq and the preset torque current given value iq* , and the torque component of the motor is adjusted

exciting current given value id*

torque current given value iq*

S5

the electrical signal (standby, shutdown or deceleration) generated by operation
or
working data of the battery pack (output current and/or temperature)
or
operating state of the motor (position and rotation speed)

the duty cycle calculation unit converts the excitation component and the torque component of the motor into a drive signal for controlling the switching circuit connected to the motor, and the drive signal is output via the output terminal of the drive signal

FIG. 6

FIG. 7

FIG. 8

**EP 3 666 482 B1**

## REFERENCES CITED IN THE DESCRIPTION

**Patent documents cited in the description**

- US 20060266184 A1
- JP 2013173228 B